Europäisches Patentamt

European Patent Office

Office européen des brevets

(19)

(11) **EP 1 132 349 A1**

(12) **EUROPEAN PATENT APPLICATION**

(43) Date of publication:
**12.09.2001 Bulletin 2001/37**

(21) Application number: **00400693.8**

(22) Date of filing: **10.03.2000**

(51) Int Cl.[7]: **C03C 1/00**, C03C 3/06,
C03C 3/095, C03C 3/102,
C03C 4/12, C03C 13/04

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI**<br><br>(71) Applicant: **CORNING INCORPORATED<br>Corning, N.Y. 14831 (US)**<br><br>(72) Inventors:<br>• **Prassas, Michel<br>Corning, NY 14831 (US)** | • **Waku, Jean<br>Corning, NY 14831 (US)**<br><br>(74) Representative: **Marchant, James Ian et al<br>Elkington and Fife,<br>Prospect House,<br>8 Pembroke Road<br>Sevenoaks, Kent TN13 1XR (GB)**<br><br>Remarks:<br>The application is published incomplete as filed<br>(Article 93 (2) EPC). |

(54) **Erbium-doped multicomponent glasses manufactured by the sol-gel method**

(57) A multicomponent particulate gel includes 80-100 mole% $SiO_2$, 1-10 mole% $X_2O$, 1-10 mole% YO, 1-15 mole% $Al_2O_3$, and 0.1-5.0 weight% $Er_2O_3$, where X represents lithium, sodium, potassium, or mixtures thereof and Y represents calcium, barium, magnesium, lead or mixtures thereof, and the ratio of $Al_2O_3$ to $(X_2O+YO)$ is between about 0.9 and about 2.5. A proc-

ess of manufacturing the gel includes hydrolyzing alkoxide derivatives of silicon, aluminum, erbium, lithium, sodium, potassium, calcium, barium, magnesium, lead or mixtures thereof in water to generate their respective hydroxide derivatives; polymerizing the hydroxide derivatives to produce a gel slurry comprising an essentially silica network; and drying the gel slurry to produce the gel.

EP 1 132 349 A1

**Description**

<u>Field of the Invention:</u>

This invention relates to a method of manufacturing doped silicate glasses and uses for these glasses and more particularly, to a manufacturing process that employs a sol-gel intermediate that requires low sintering temperatures to manufacture these glasses.

## BACKGROUND OF THE INVENTION

Glass has been used for decorative and structural applications for millennia. In these applications the precise chemical composition and homogeneity on a molecular level were not overly critical. Glass is now being used in highly technical applications such as telecommunications where purity and homogeneity on the molecular level are absolutely crucial to their successful implementation.

Areas within the telecommunication technology where these issues are of paramount concern are for example, in the production of planar waveguides, optical fiber preform for amplifier fibers, and optical gratings. In order for glass to serve as a useful media for transporting information over long distances, the glass must be highly transparent and of high uniformity. Current manufacturing processes typically employing a melt of metal and/or metal salts followed by stirring for homogenizing the melt and subsequent cooling and casting procedures. This process although good enough for glass compositions in the field of optics and ophthalmic, do not provide the required glass quality necessary to applications in the field of optical telecommunications, where low attenuation (less than 0.5 dB/Km) and molecular level distribution of active elements similar to erbium are a necessity. This is especially true for compositions containing more than 80% silica which are extremely difficult to melt and homogenize by conventional melting techniques.

It would therefore be desirable to have a process that provides glass of high purity and homogeneity on the molecular level, and to provide a doped glass that can be used in such applications as planar waveguides and optical fiber preform for amplifier fibers. It would also be desirable to provide a glass that is essentially free of defects.

## SUMMARY OF THE INVENTION

One aspect of the present invention is a multicomponent particulate gel which includes 80-100 mole% $SiO_2$, 1-10 mole% $X_2O$, 1-10 mole% YO, 1-15 mole% $Al_2O_3$, and 0.1-5.0 weight% $Er_2O_3$, where X represents lithium, sodium, potassium, or mixtures thereof and Y represents calcium, barium, magnesium, lead or mixtures thereof, and the ratio of $Al_2O_3$ to$(X_2O+YO)$ is between about 0.9 and about 2.5.

In another aspect, the present invention includes a process of manufacturing the gel, which includes the steps of hydrolyzing alkoxide derivatives of silicon, aluminum, erbium, lithium, sodium, potassium, calcium, barium, magnesium, lead or mixtures thereof in water to generate their respective hydroxide derivatives; polymerizing the hydroxide derivatives to produce a gel slurry comprising an essentially silica network; and drying the gel slurry to produce the gel.

In another aspect, the invention includes a process of manufacturing a gel by providing a colloidal solution of nanoparticles which comprises 80-100 mole% $SiO_2$, 1-10 mole% $X_2O$, 1-10 mole% YO, 1-15 mole% $Al_2O_3$, and 0.1-5.0 weight% $Er_2O_3$, where X represents lithium, sodium, potassium, or mixtures thereof and Y represents calcium, barium, magnesium, lead or mixtures thereof, and the ratio of $Al_2O_3$ to $(X_2O+YO)$ is between about 0.9 to about 2.5. The colloidal solution is gelated to form a gel slurry by adjusting the pH to less than 7. The gel slurry is dried to produce the gel.

In another aspect, the invention includes a process of manufacturing a gel by providing a colloidal solution of nanoparticles which comprises 80-100 mole% $SiO_2$, 1-10 mole% $X_2O$, 1-10 mole% YO, 1-15 mole% $Al_2O_3$, and 0.1-5.0 weight% $Er_2O_3$, where X represents lithium, sodium, potassium, or mixtures thereof and Y represents calcium, barium, magnesium, lead or mixtures thereof, and the ratio of $Al_2O_3$ to$(X_2O+YO)$ is between about 0.9 to about 2.5; gelating the colloidal solution to form a gel slurry by adjusting the pH from about 2 to about 5.5; and drying the gel slurry to produce the gel.

In another aspect, the invention includes a process of manufacturing a multicomponent dry gel comprising 95 mole% $SiO_2$, 2 mole% $Al_2O_3$, 1 mole% $K_2O$, 1 mole% $Na_2O$, and 2 weight% $Er_2O_3$, by dissolving a predetermined weight of solid aluminum nitrate in water to prepare a solution and then mixing the aluminum nitrate solution with colloidal $SiO_2$ nanoparticles until a first uniform mixture is obtained. Predetermined weights of powders of nitrate salts of potassium and erbium are added and mixed with the first uniform mixture to obtain a second uniform mixture. The second uniform mixture is cast in a sealed plastic mold to produce a translucent wet gel which comprises approximately 40% solids. The translucent wet gel is dried at ambient temperature and then at elevated temperatures to create the dry multicomponent gel.

In another aspect, the invention includes a process for manufacturing a multicomponent glass having a composition of 80-100 mole% $SiO_2$, 1-10 mole% $X_2O$, 1-10 mole% YO, 1-15 mole% $Al_2O_3$, and0.1-5.0 weight% $Er_2O_3$, where X represents lithium, sodium, potassium, or mixtures thereof and Y represents calcium, barium, magnesium, lead or mixtures thereof, and the ratio $Al_2O_3/(X_2O+YO)$ is between about 0.9 to about 2.5. The process includes sintering a multicomponent dry gel by heating the dry gel at approximately 100°C/hour to 600°C; maintaining the dry gel at 600°C for approximately 90 minutes; heating the dry gel to sinter it at approximately 100°C/hour to approximately 900°C to 1200°C; and cooling it to ambient conditions.

A process according to an embodiment of the invention may utilize a sol-gel technique to prepare an intermediate. The intermediate, itself, can be sintered to a doped glass at a lower temperature than currently is available by the standard melt of metal oxides. Utilizing the sol-gel process also may provide the added benefit of assuring homogeneity on a molecular level because one of the process steps employs a low-viscosity solution phase where diffusion can readily occur. Several variations in preparing a gel from a sol precursor are described in detail.

Additional features and advantages of the invention will be set forth in the detailed description which follows, and in part will be readily apparent to those skilled in the art from that description or recognized by practicing the invention as described herein, including the detailed description which follows,and the claims.

It is to be understood that both the foregoing general description and the following detailed description are merely exemplary of the invention, and are intended to provide an overview or framework for understanding the nature and character of the invention as it is claimed. The description serves to explain the principles and operation of the invention.

DETAILED DESCRIPTION OF THE INVENTION

Sol-gel processing has become one of the most important methods for preparing new functional inorganic materials. One of the advantages of this process is the possibility of directly producing shaped objects in bulk, fiber, and thin film form. Therefore, this process would appear to have great utility for glassmaking. Perhaps equally important is that the process provides materials which are inherently homogeneous due to being in a liquid solution, or a sol stage. Another attribute of the process as it relates to glassmaking is the benefit derived from the mild sintering conditions that are available for converting dried gel into finished glass.

As mentioned hereinabove, doping of glass with rare earth and other light emitting elements provides materials that are advantageous for the telecommunications industry. The sol-gel process is amenable to allow facile incorporation of such dopant materials homogeneously throughout the glass matrix.

One such dopant of particular utility is erbium. Erbium, at levels of approximately 1%, provides a fluorescence bandwidth and lifetime, when doped in the disclosed silicate compositions, that makes it valuable for use as a precursor for Type III gain fibers. It has been determined that incorporation of erbium typically requires the ratio of aluminum oxide to alkali metal oxides in the glass matrix to be higher than 0.9 if the erbium doped silica is to be used as a precursor for broad bandwidth planar waveguide. The impact of the ratio of aluminum oxide to alkali metal oxide on the fluorescence bandwidth has been demonstrated for the first time on high silica glasses containing alkali metals. Fluorescence lifetimes in the range 8 to 11 milliseconds has been found for glasses doped with 1 wt% $Er_2O_3$ despite taking no particular care to dehydrate the gels.

The major advantage of the sol-gel process over chemical vapor deposition (CVD) compositions is the reproducibility and facility with which alkali or alkaline earth and alumina can be introduced at the desired ratio to obtain large bandwidth while avoiding aggregation of aluminum oxide and erbium oxide. The composition range of the sol-gel material and ultimately the final glass includes high silica glasses (e.g., >85 mole%), which are extremely difficult to produce by conventional melting techniques.

The sol-gel method of glass synthesis comprises three principal steps:

  a) gelation of the desired composition,

  b) drying of the gel body, and

  c) consolidation or sintering to a transparent body.

Two approaches to obtain the gel from the sol can be used in the present invention:

  a) hydrolysis and polycondensation of alkoxides, and

  b) destabilization of colloidal solutions.

For the purposes of this invention, a sol is defined as discrete, colloid-size particles or macromolecular species dispersed in a solvent. Stable sols can have particle sizes ranging from about 10 nm up to about 300 nm. The sol has properties similar to a true solution but individual particles or macromolecular species undergo Brownian motion.

Since the sol is a low-viscosity solution-like material, homogeneity within the sol, formed from either of the two alternatives, can be easily effected by mixing for short periods of time. Furthermore, the extent of the homogeneity in the sol remains with the gel and the resultant glass after consolidation.

For the purposes of this invention, a gel is defined as a coherent, continuous, three-dimensional network of colloidal particles. In the case of silica, the gel is typically a hydrated gel. The gel may have long term stability if there is a balance of the interactive forces between solid phase molecules and solvent molecules. This delicate balance can be broken by a number of factors. The gel itself has properties almost liquid-like when the concentration of solute is low (i.e., low viscosity and minimal ability to retain a given shape). When concentrations of solute are high, the gel possesses properties more similar to that of a solid or glass (i.e., very high viscosity, physical hardness, and ability to retain a given structure). Gels are on a continuum between these liquid-like and solid-like properties.

In the first of the two inventive gelation approaches, a solution of a molecular precursor, inorganic alkoxide, is hydrolyzed and then ultimately polymerized or agglomerated to yield an insoluble gel. Examples of useful alkoxides include: tetraalkyl orthosilicates, trialkyl orthoaluminates, trialkyl orthoborates, sodium alkoxide, calcium alkoxide, and the like. The alkyl functionalities in these materials or typically short chain alkyl functions and range from methyl to saturated or unsaturated radicals containing up to seven carbon atoms, for example, ethyl, propyl, butyl, pentyl, hexyl, and benzyl. All such radicals can be further substituted with other functionalities, preferably functionalities that confer improved water solubility such as carboxy, hydroxy and sulfoxy groups. The most preferred radical in the present invention is ethyl.

Hydrolysis of the molecular precursor, inorganic alkoxides converts the alkoxy functionality into a hydroxy functionality generating inorganic hydroxides for example,

$$Si(OC_2H_5)_4 + 4H_2O \text{-----}>Si(OH)_4 + 4C_2H_5OH.$$

Typically the alkoxide hydrolysis is made in an alcoholic solvent. The alcohol preferably has to correspond to the alkoxy group linked to the metal alkoxide (i.e., if the alkoxide is tetraethyl orthosilicate, then the alcohol will be ethanol). Hydrolysis rates can be accelerated or delayed by selecting an alkoxide with a short chain or long chain alkyl respectively. The proportion of the alcohol is such that the volume fraction of the alkoxide is not less than about 50%. The hydrolysis step is made usually at pH less than 5 and preferably less than 3 in order to dissociate it from the polycondensation which takes place immediately after formation of the Si-OH sites. The hydrolysis reaction takes place in the range of 20 to 40°C for a period of time between about 10 minutes to about a few hours. The other composition elements can be added either as alkoxides or salts.

In the first case all alkoxides diluted on the corresponding alcohol are mixed first and the mixture is stirred for a period of time between 2 and 10 hours. The system is reacted with acid water to bring the pH in the appropriate range. Any organic or inorganic acid can be used. The preferred acids are HCl or $HNO_3$.

In the second case the silicon alkoxide is first hydrolyzed under acid conditions for a period of time between 2 to 10 hours. Then the other elements, prediluted in alcohol or a small amount of water, are added to the pre-hydrolyzed silicon alkoxide. The pH of the final system is then set by acidified water to a value less than 5 and preferably less than 3.

Polymerization or gelation of the thus formed inorganic hydroxides essentially is a condensation process whereby water molecules are extracted from the inorganic hydroxides to yield inorganic oxides. For example,

$$Si(OH)_4 \text{-----------}> SiO_2 + 2H_2O.$$

In this manner the sol is destroyed and a gel phase begins to form. Specifically for silica, hydrated gels are initially formed. Hydrated gels are defined as having a solute phase comprising essentially silicon dioxide particles having a low level of oxygen-hydrogen bonds primarily on the surface of the particle and a solvent phase, typically comprising water.

Gelation can be accelerated by addition of a basic solution of $NH_4OH$. At pH between about 5 to about 7 the final hydroxide groups condense together and the viscosity of the mixture increases transforming the sol to a gel. Where condensing agents are utilized the reaction temperature can range from ambient to 40 °C. The gelation can be also performed by increasing the temperature without the need of condensing agents. Typically an increase of the reaction temperature to around 80□C will gelify the mixture in a few hours.

If the solution has to be used for depositing thin films the reaction scheme should be modified in order to avoid a fast gelation. Therefore in this case mild conditions of gelation (pH between 3 to 4) are used and the mixture is diluted to obtain 2 to 5% volume fraction of the alkoxides in the reaction system.

During the condensation phase, the inorganic oxides (e.g., silicon dioxide) eventually form a three dimensional network and phase separate to form a gel slurry. In the case of a multicomponent sol (i.e., where more than one alkoxide is in solution), the thus formed gel slurry retains the same molecular ratio as in the starting sol composition.

Using the destabilization method (i.e., the second of the two approaches for forming gels) the starting point is a stable sol comprising extremely small, discrete, colloidal particles. The size of these particles is typically in the nanometer range. As such, there is little affinity for particle-particle interaction; so for practical purposes within this invention, the colloid can be considered to have the same properties as that of a solution.

The stability of the sol can be destroyed by varying certain conditions; for example, concentration, ionic strength or pH results in gelation or agglomeration of the colloid. In this situation the discrete particles have an increased affinity for one another and the effective particle size increases to the point where a second phase forms, thereby producing a gel slurry. In the case where colloidal solutions of silica are used as the precursor for silica, the solutions are indefinitely stable at pH higher than 9. Therefore, before reacting with the other elements of the composition the pH of the colloidal silica precursor should be modified by reacting with concentrated HCl to bring its pH below 7 and preferably below 5.

For the purposes of this invention it is expressly stated that elements of the two methods of gelation can be combined, for example, alkoxides can be added to the colloidal destabilization process or colloids can be added to the alkoxide process. Furthermore, soluble salts such as metal nitrates and the like can be added to either process. When these combinatorial processes are performed, it is highly desirable that there be at least one time in the process where true homogeneity of all components is achieved. However, this is not a requirement; soluble salts can be added to the gel slurry or the later formed dried gel.

Gelation for either process described supra can be performed under ambient temperature or elevated temperatures. At ambient temperature the gelation process can take one or more hours. Gelation times can be reduced to several minutes at higher temperatures, but care must be taken not to induce bubbles in the gel slurry. Typically gels with higher solids content present less cracking. Bubble- and crack-free gel slurries have been obtained after one week of gelation at ambient temperature.

These gel slurries can be cast, molded or otherwise formed into final shape such as a film, fiber or bulk object. During this process, additional gelation can also occur. It should be noted that the sol materials can be placed into the mold prior to gelation so that the casting and gelation occur simultaneously. The final gel slurry, translucent in appearance, is physically soft but retains the shape of the optional casting and is approximately 40% solids.

After formation of the final gel slurry and optional creation of a final shape, the gel slurry is dried to essentially remove the liquid. During the drying process the gel slurry shrinks by approximately 40% (i.e., the volume of the liquid) to produce a porous, physically hard object. Drying typically is performed in two stages: 24 hours at ambient temperature, and 24 hours at 100°C. The process can be performed under vacuum or ambient pressure in the presence of air or any gas that does not react with the components of the gel.

Gels, both in slurry form or dry form, can be impregnated with solutions of soluble metal salts such as potassium, aluminum and erbium nitrates. Using this technique, true chemical homogeneity is not necessarily achieved as evidenced by occasional observations of translucent zones. However, critical parameters of the glass such as fluorescence lifetime and bandwidth are still within acceptable values.

Gels formed from the alkoxide procedure have very small pores typically having pore diameters in the range of 5 nm, while the gels derived from the colloid process have pore sizes which are larger, ranging in size from 10 to 1000 nm. Pore size significantly influences the next step in the inventive process, viz, sintering to form the final glass product. The smaller the pore size (i.e., low porosity) the lower the sintering temperature that is required to form the glass product. For example with slurry gels of pure silica from the alkoxide process, sintering temperatures as low as 900° to 1200°C can be employed. Under these mild conditions the deleterious effect of "crystallization" is avoided. Crystallization decreases the transparency of the final glass making it unsuitable for certain applications especially within the telecommunications arena.

The gels produced by the colloid destabilization process typically require relatively high sintering temperatures such as approximately 1400°C for pure silica. Sintering at these temperatures is near to the crystallization temperature but is less of an issue when the gel is of multicomponent composition and network modifiers such as $K_2O$ and $Na_2O$ are present. Under these circumstances silica up to 95 mole% pure can be sintered at approximately 1200°C. Moreover, the sintering temperature can be substantially reduced to approximately 700°C by using additives such as lead oxide.

The pore size cannot be reduced too much since small pores cause cracks due to capillary forces during the drying. Preforms or cast liquid slurries having open, large pore sizes are preferred for successful drying. Preferred pore size range is between about 40 nm and about 500 nm and porosity values about 20% to about 70%.

No specific measurements for porosity or pore size have been taken on the gels of the present invention, but based on knowledge of those skilled in the art, gels manufactured in the present invention have porosity between 50 and 80% and pore sizes less than 300 nm. These values should not be taken as limiting and are for illustrative purposes only.

A sintering temperature window must be found for each composition for converting the consolidated, dry gel into a transparent glass. A typical sintering cycle useful in the present invention is heating at 100° C/hour to 600°C, maintaining the temperature at 600°C for a period of 90 minutes, and then again heating at 100°C/hour to 900° to 1200°C.

The gels in the present invention can either be dehydrated or not, depending upon process conditions. When the gel is not dehydrated, hydroxyl groups can cause foam in the glass at the elevated sintering temperatures. The hydroxyl content in the gel can be lowered with high temperature treatment using carbon tetrachloride ($CCl_4$), thionyl chloride ($SOCl_2$), chlorine gas or inclusion of a fluorine-containing component (e.g., HF, $NH_4F$, etc.) into the initial reaction mixture. Bubbling occurs in non-dehydrated $SiO_2$ gels. Even dehydrated silica glass formed by chlorinating dry gels can reboil at higher temperatures if chlorine is introduced at high content. In this latter case, bubbling is caused by chlorine which has been substituted for the hydroxyl group in the dehydrated gel. This bubbling can be observed during the sintering process or at later points in the manufacture of the glass, for example, while drawing the glass into fibers at approximately 2000°C. Enlarging the particle size aids in reducing the extent of bubbling. In the present invention, using PST-1, PST-2 or PST-3 colloidal silica from Nissan Chemicals, having particle size ranging from 100 to 500 nm, avoids foaming in the dehydrated gels. Since the presence of hydroxyl groups in glass lowers erbium fluorescence properties (see hereinbelow), it is preferred that dehydrated gels be used in the present invention.

The temperature at which dehydration is performed is in the range between 300 to 700°C depending of the dehydrating agents and the porosity of the dried gel.

After dehydration, in order to avoid re-absorption of water from the ambient atmosphere, the gels should be sintered at higher temperature (1000-1400°C) under Helium flow. If the sintering is not performed substantially sequentially the dehydrated gels have to be stored previous to sintering step under a water-free atmosphere.

Glasses of the following compositions can be manufactured using the processes described supra and are useful in such areas as the telecommunications industry.

| | |
|---|---|
| $SiO_2$ | 80-100 mole% |
| $X_2O$ | 1-10 mole% |
| YO | 1-10 mole% |
| $Al_2O_3$ | 1-15 mole%; |

wherein X represents lithium, sodium, or potassium and Y represents calcium, barium, magnesium, or lead. Other metal oxides such as $B_2O_3$, $TiO_2$, $Y_2O_3$, and $Gd_2O_3$ can be added either individually or in combination to the composition up to a total of 0.5 mole% for the combination of $TiO_2$, $Y_2O_3$, and $Gd_2O_3$ oxides and up to 10 mole% for $B_2O_3$. $GeO_2$ can be used as a replacement for $SiO_2$ up to 10 mole%. In all cases $Al_2O_3/(YO+X_2O)$ should be greater than 0.9 but less than 2.5.

For specific applications within the telecommunications industry, glasses that are highly transparent and possess fluorescing properties are desirable, especially for Type III fibers for optical amplification and planar waveguides with large bandwidth. These fibers have significant amounts of $Al_2O_3$ ($Al_2O_3/X_2O$ ratios >1) for enlarging the spectral response of the fluorescing agent and to assist in preventing clustering of the fluorescing agent in the glass matrix.

One fluorescing agent of particular import is erbium. It provides a fluorescent bandwidth that has a broad gain curve and is flat. The concentration of erbium in the glass affects its fluorescent lifetime. Therefore, it is especially critical that the erbium be uniformly distributed throughout the glass matrix so that no zones of high concentration are formed. Few conventional processes are able to provide these combination of factors. The inventive sol-gel process has been shown to provide superior properties for these applications as

**Claims**

1. A multicomponent particulate gel comprising the composition of:

   a) 80-100 mole% $SiO_2$,
   b) 1-10 mole% $X_2O$,
   c) 1-10 mole% YO,
   d) 1-15 mole% $Al_2O_3$, and
   e) 0.1-5.0 weight% $Er_2O_3$,

   wherein X represents lithium, sodium, potassium, or mixtures thereof and Y represents calcium, barium, magnesium, lead or mixtures thereof, and the ratio $Al_2O_3/(X_2O+YO)$ is between about 0.9 and about 2.5.

2. The gel recited in claim 1, further comprising: f) about 1 to about 10 mole% $B_2O_3$.

3. The gel recited in claim 1, further comprising one or more of:

   g) $TiO_2$,
   h) $Y_2O_3$, or
   i) $Gd_2O_3$;

   up to a total of 0.5 mole% for all three oxides.

4. The gel recited in claim 2, further comprising one or more of:

   g) $TiO_2$,
   h) $Y_2O_3$, or
   i) $Gd_2O_3$ ;

   up to a total of 0.5 mole% for all three oxides.

5. The gel recited in claim 1, wherein $GeO_2$ replaces $SiO_2$ up to 10 mole%.

6. The gel recited in claim 1, wherein said gel has a pore size from about 0.04 micron to about 0.5 micron and a porosity of about 20% to about 70%.

7. A process of manufacturing the gel recited in claim 1, comprising the steps of:

   hydrolyzing alkoxide derivatives of silicon, aluminum, erbium, lithium, sodium, potassium, calcium, barium, magnesium, lead or mixtures thereof in water to generate their respective hydroxide derivatives;
   polymerizing said hydroxide derivatives to produce a gel slurry comprising an essentially silica network; and
drying said gel slurry to produce said gel.

8. The process as recited in claim 7, wherein incorporation into said gel of compounds of aluminum, erbium, lithium, sodium, potassium, calcium, barium, magnesium, lead or mixtures thereof is achieved by introducing said compounds in the form of colloidal solutions prior to said polymerizing step.

9. The process as recited in claim 8, wherein said colloidal solutions comprises particles between 50 nm and 500 nm in size.

10. The process as recited in claim 7, wherein incorporation into said gel of compounds of aluminum, erbium, lithium, sodium, potassium, calcium, barium, magnesium, lead or mixtures thereof is achieved by introducing said compounds in the form of dissolved salts prior to said polymerizing step.

11. A process of manufacturing a gel comprising the steps of:

   a) providing a colloidal solution of nanoparticles comprising:

   i) 80-100 mole% $SiO_2$,
   ii) 1-10 mole% $X_2O$,
   iii) 1-10 mole% $YO$,
   iv) 1-15 mole% $Al_2O_3$, and
   v) 0.1-5.0 weight% $Er_2O_3$,

   wherein X represents lithium, sodium, potassium, or mixtures thereof and Y represents calcium, barium, magnesium, lead or mixtures thereof, and the ratio
   $Al_2O_3/(X_2O+YO)$ is between about 0.9 to about 2.5;

   b) gelating said colloidal solution to form a gel slurry by adjusting the pH to less than 7; and

   c) drying said gel slurry to produce said gel.

12. A process of manufacturing a gel comprising the steps of:

   a) providing a colloidal solution of nanoparticles comprising:

   i) 80-100 mole% $SiO_2$,
   ii) 1-10 mole% $X_2O$,
   iii) 1-10 mole% $YO$,
   iv) 1-15 mole% $Al_2O_3$, and
   v) 0.1-5.0 weight% $Er_2O_3$,

   wherein X represents lithium, sodium, potassium, or mixtures thereof and Y represents calcium, barium, magnesium, lead or mixtures thereof, and the ratio $Al_2O_3/(X_2O+YO)$ is between about 0.9 to about 2.5;

   b) gelating said colloidal solution to form a gel slurry by adjusting the pH from about 2 to about 5.5; and

   c) drying said gel slurry to produce said gel.

13. The process as recited in claim 11, wherein said colloidal solution of nanoparticles further comprises:
   vi) about 1 to about 10 mole% $B_2O_3$.

14. The process as recited in claim 12, wherein said colloidal solution of nanoparticles further comprises:
   vi) about 1 to about 10 mole% $B_2O_3$.

15. The process as recited in claim 11, wherein incorporation into said gel of compounds of aluminum, erbium, lithium, sodium, potassium, calcium, barium, magnesium, lead or mixtures thereof is achieved by introducing said compounds in the form of colloidal solutions prior to said gelating step (b).

16. The process as recited in claim 11, wherein incorporation into said gel of compounds of aluminum, erbium, lithium, sodium, potassium, calcium, barium, magnesium, lead or mixtures thereof is achieved by introducing said compounds in the form of dissolved salts prior to said gelating step (b).

17. The process as recited in claim 11, wherein incorporation into said gel of compounds of aluminum, erbium, lithium, sodium, potassium, calcium, barium, magnesium, lead or mixtures thereof is achieved by impregnating said compounds in the form of nitrate salts subsequent to said drying step (c).

18. The process as recited in claim 11, wherein hydrochloric acid is used to adjust said pH.

19. A process of manufacturing a multicomponent dry gel comprising 95 mole% $SiO_2$, 2 mole% $Al_2O_3$, 1 mole% $K_2O$, 1 mole% $Na_2O$, and 2 weight% $Er_2O_3$, said process comprising the steps of:

   a) dissolving a predetermined weight of solid aluminum nitrate in water to prepare a solution of said aluminum nitrate;

   b) mixing said aluminum nitrate solution with colloidal $SiO_2$ nanoparticles until a first uniform mixture is obtained;

c) adding and mixing predetermined weights of powders of nitrate salts of potassium and erbium to said first uniform mixture to obtain a second uniform mixture;

d) casting said second uniform mixture in a sealed plastic mold to produce a translucent wet gel comprising approximately 40% solids; and

e) drying said translucent wet gel at ambient temperature and then at elevated temperatures to create said dry multicomponent gel.

20. A process of manufacturing a multicomponent glass having the composition of:

i) 80-100 mole% $SiO_2$,
ii) 1-10 mole% $X_2O$,
iii) 1-10 mole% YO,
iv) 1-15 mole% $Al_2O_3$, and
v) 0.1-5.0 weight% $Er_2O_3$,

wherein X represents lithium, sodium, potassium, or mixtures thereof and Y represents calcium, barium, magnesium, lead or mixtures thereof, and the ratio $Al_2O_3/(X_2O+YO)$ is between about 0.9 to about 2.5; said process comprising sintering a multicomponent dry gel by the steps of:

a) heating said dry gel at approximately 100°C/hour to 600°C;

b) maintaining said dry gel at 600°C for approximately 90 minutes;

c) heating to sinter said dry gel at approximately 100°C/hour to approximately 900°C to 1200°C; and

d) cooling said dry gel to ambient conditions.

21. The process of manufacturing a multicomponent glass as recited in claim 20 wherein said dry gel is obtained from the steps of:

hydrolyzing alkoxide derivatives of silicon, aluminum, erbium, lithium, sodium, potassium, calcium, magnesium, barium, lead or mixtures thereof in water to generate their respective hydroxide derivatives;
polymerizing said hydroxide derivatives to produce a gel slurry comprising an essentially silica network; and
drying said gel slurry to produce said gel.

22. The process of manufacturing a multicomponent glass as recited in claim 20 wherein said dry gel is obtained from the steps of:

providing a colloidal solution of nanoparticles comprising said composition recited in claim 14;

gelating said colloidal solution to form a gel slurry by adjusting the pH to below about 7; and

drying said gel slurry to produce said gel.

23. The process of manufacturing a multicomponent glass as recited in claim 20 wherein said dry gel is obtained from the steps of:

providing a colloidal solution of nanoparticles comprising said composition recited in claim 14;
gelating said colloidal solution to form a gel slurry by adjusting the pH between about 2 and about 5.5; and
drying said gel slurry to produce said gel.

24. A glass derived from the process in claim 20, said glass is essentially homogeneous containing no translucent zones.

25. The glass recited in claim 24, said glass possessing a fluorescent lifetime of between about 5 milliseconds to about 20 milliseconds.

26. The glass recited in claim 24, said glass possessing a bandwidth of about 10 nm to about 60 nm.

27. A multicomponent silica glass comprising the composition of:

a) 80-100 mole% $SiO_2$,
b) 1-10 mole% $X_2O$,
c) 1-10 mole% YO,
d) 1-15 mole% $Al_2O_3$, and
e) 0.1-5.0 weight% $Er_2O_3$,

wherein X represents lithium, sodium, potassium, or mixtures thereof and Y represents calcium, barium, magnesium, lead or mixtures thereof, and the ratio $Al_2O_3/(X_2O+YO)$ is between about 0.9 and about 2.5.

28. The silica glass recited in claim 27, further comprising:

f) about 1 to about 10 mole% $B_2O_3$.

29. The silica glass recited in claim 27, further comprising one or more of:

g) $TiO_2$,
h) $Y_2O_3$, or

i) $Gd_2O_3$;

up to a total of 0.5 mole% for all three oxides.

30. The use of said glass recited in claim 27 as a planar waveguide.

31. The use of said glass recited in claim 27 as an optical fiber preform for amplifier fibers.

**European Patent Office**

## EUROPEAN SEARCH REPORT

Application Number

EP 00 40 0693

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 565 277 A (AMERICAN TELEPHONE & TELEGRAPH) 13 October 1993 (1993-10-13) * example 10 * | 1-31 | C03C1/00 C03C3/06 C03C3/095 C03C3/102 C03C4/12 C03C13/04 |
| A | EP 0 565 439 A (FUJIKURA LTD) 13 October 1993 (1993-10-13) * the whole document * | 31 | |
| A | JP 07 109147 A (NIPPON SHEET GLASS CO LTD) 25 April 1995 (1995-04-25) * examples 1,3,5-7,9,10,13 * Comparative example 1 | 1-31 | |
| A | JP 04 280834 A (NIPPON SHEET GLASS CO LTD) 6 October 1992 (1992-10-06) * examples * | 1-31 | |

TECHNICAL FIELDS
SEARCHED (Int.Cl.7)

C03C

The present search report has been drawn up for all claims

| Place of search | Date of completion of the search | Examiner |
|---|---|---|
| MUNICH | 12 January 2001 | Somann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 40 0693

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2001

| Patent document cited in search report | | Publication date | Patent family member(s) | | Publication date |
|---|---|---|---|---|---|
| EP 0565277 | A | 13-10-1993 | US | 5250096 A | 05-10-1993 |
| | | | JP | 3040278 B | 15-05-2000 |
| | | | JP | 6024754 A | 01-02-1994 |
| EP 0565439 | A | 13-10-1993 | JP | 2766420 B | 18-06-1998 |
| | | | JP | 5286726 A | 02-11-1993 |
| | | | DE | 69303960 D | 19-09-1996 |
| | | | DE | 69303960 T | 06-03-1997 |
| | | | SG | 43149 A | 17-10-1997 |
| | | | US | 5474588 A | 12-12-1995 |
| | | | US | 5526459 A | 11-06-1996 |
| JP 07109147 | A | 25-04-1995 | NONE | | |
| JP 04280834 | A | 06-10-1992 | NONE | | |

EPO FORM P0459

For more details about this annex : see Official Journal of the European Patent Office, No. 12/82